(19) Europäisches Patentamt / European Patent Office / Office européen des brevets

(11) **EP 2 157 451 A1**

(12) **DEMANDE DE BREVET EUROPEEN**

(43) Date de publication:
**24.02.2010 Bulletin 2010/08**

(51) Int Cl.:
**G01V 11/00** *(2006.01)*

(21) Numéro de dépôt: **09290536.3**

(22) Date de dépôt: **03.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **19.08.2008 FR 0804640**

(71) Demandeur: **IFP**
**92852 Rueil-Malmaison Cédex (FR)**

(72) Inventeurs:
• **Ding, Didier**
**78230 Le Pecq (FR)**
• **Roggero, Frédéric**
**92500 Rueil-Malmaison (FR)**

(54) **Méthode de calage d'historique de réservoir pétrolier au moyen de paramétrisations locales**

(57)    - Méthode pour construire une image d'un réservoir pétrolier à partir de données dynamiques.

- On génère au moins deux réalisations indépendantes du réservoir à partir d'au moins deux bruits blancs gaussiens. On définit au moins une région au sein du réservoir, et on définit un paramètre permettant de modifier la forme et la taille de cette région. Puis, on génère une nouvelle réalisation du réservoir, à partir d'une combinaison linéaire des bruits blancs. Les coefficients de cette combinaison linéaire dépendent du paramètre permettant de modifier la région. On calcule alors une fonction objectif locale mesurant au sein de cette région, une différence entre des données dynamiques simulées à partir de la nouvelle réalisation et les données dynamiques mesurées. Enfin, on construit l'image du réservoir en modifiant de façon itérative le paramètre, de façon à minimiser la fonction objectif locale.

- Application notamment à la caractérisation de gisements pétroliers.

**Figure 1**

EP 2 157 451 A1

**Description**

La présente invention concerne un domaine technique de l'industrie pétrolière : la caractérisation de réservoir pétrolier par modélisation géologique.

Plus particulièrement, l'invention concerne une méthode de calage d'historique (« *history matching* »), par modification graduelle d'une image représentative du réservoir pétrolier, de façon à respecter des données sismiques et des données dynamiques, telles que la production d'huile, la production d'eau, le ratio gaz/huile (GOR), la proportion d'eau de production (« water cut ») et les impédances sismiques, etc.

L'optimisation et l'exploitation des gisements pétroliers reposent sur une description aussi précise que possible de la structure et des propriétés pétrophysiques du gisement étudié. Pour ce faire, les spécialistes utilisent un outil qui permet de rendre compte de ces deux aspects de façon approchée : le modèle géologique. Un modèle géologique a donc pour vocation de rendre compte, au mieux, de la structure et des propriétés pétrophysiques d'un gisement. Le modèle géologique est constitué de différents éléments : un maillage qui constitue l'ossature du gisement et qui doit être représentatif de la structure, et des cartes(ou images) tri ou bidimensionnelles de propriétés pétrophysiques associées à ce maillage et qui doivent être représentatives du comportement statique ou dynamique du gisement.

Dans l'industrie pétrolière, il est très important de caractériser les réservoirs en utilisant les données dynamiques comme les données de production ou les données de sismique 4D. Pour construire une carte des hétérogénéités de réservoirs, on utilise souvent des méthodes géostatistiques. Dans ce contexte, les cartes sont appelées « réalisations géostatistiques ». Elles sont générées de façon aléatoire, et ne permettent généralement pas de caler les données de production et/ou de sismique. Pour contraindre ces cartes (réalisations) par les données mesurées, il est nécessaire de les paramétrer pour pouvoir ensuite appliquer une méthode d'optimisation, de façon à minimiser un critère de calage, représentant les écarts entre résultats de simulation et mesures. Paramétrer une image, ou réalisation dans le contexte des méthodes géostatistiques, signifie définir un paramètre dont la modification permet d'obtenir une nouvelle image. Un paramètre est donc généralement associé à une méthode de construction ou de déformation d'image, basée sur ce paramètre.

**État de la technique**

Quelques méthodes ont été proposées pour paramétrer des réalisations géostatistiques. La méthode de déformation graduelle présentée par Roggero, F. et Hu, L.Y.: "Gradual deformation of continuous geostatistical models for history matching", paper SPE-49004, Proc. SPE Annual Technical Conference and Exhibition, New Orleans, 1998, introduit un paramètre, qui permet de combiner deux réalisations géostatistiques, pour générer une nouvelle réalisation, qui varie d'une réalisation existante à l'autre, tout en gardant la cohérence géostatistique. Cette méthode est une approche globale, qui ne prend pas en compte les variations de fonction objectif dans des régions locales.

Pour améliorer cette approche, la méthode de déformation graduelle locale présentée par Hu, L.Y.: "Gradual deformation and iterative calibration of Gaussian-related stochastic models", Mathematical Geology, Vol.32, No.1, 2000, permet de combiner deux réalisations géostatistiques dans des régions locales prédéfinies. Les régions sont délimitées par des mailles stratigraphiques. Les domaines géométriques de ces régions locales ne changent pas au cours d'un processus d'optimisation.

Une autre méthode pour prendre en compte les impacts locaux, nommée "patchwork", est proposée par COSTA REIS, L.: "Intégration des données dynamiques dans un modèle géostatistique de réservoir", thèse de doctorat, Université Paris 6, 2001. Selon cette approche, plusieurs réalisations sont générées. Puis, à l'aide de simulateur de réservoir, on simule des données dynamiques. Une nouvelle réalisation est ensuite générée en combinant des réalisations existantes sur les mailles stratigraphiques, selon les valeurs de fonction objectif dans des régions locales. Mais l'absence de paramétrisation de cette approche ne permet pas d'appliquer une méthode d'optimisation pour faciliter le calage historique.

Ainsi, l'objet de l'invention est une méthode alternative pour construire ou modifier localement l'image d'un réservoir pétrolier, de façon à ce que cette image soit cohérente avec des données dynamiques mesurées sur le terrain. La méthode se base sur une paramétrisation locale d'images de réservoir issues de modélisations géostatistiques, tout en prenant en compte des critères de calage pour des régions locales (puits et/ou région sismique).

**La méthode selon l'invention**

L'invention concerne une méthode pour construire une image d'un réservoir pétrolier, à partir de données dynamiques mesurées au sein dudit réservoir. Elle comporte les étapes suivantes :

  a- on génère au moins deux réalisations indépendantes dudit réservoir à partir d'au moins deux bruits blancs gaussiens ;

b- on définit au moins une région au sein dudit réservoir, et on définit un paramètre permettant de modifier ladite région ;

c- on génère une nouvelle réalisation dudit réservoir, à partir d'une combinaison linéaire desdits bruits blancs gaussiens, dont les coefficients de combinaison linéaire dépendent dudit paramètre permettant de modifier la région ;

d- on calcule une fonction objectif locale mesurant au sein de ladite région, une différence entre des données dynamiques simulées à partir de ladite nouvelle réalisation et lesdites données dynamiques mesurées ; et

e- on construit ladite image du réservoir en modifiant ledit paramètre de façon à minimiser ladite fonction objectif locale, et en réitérant à l'étape c).

Selon l'invention, le paramètre peut permettre de modifier la taille et la forme de la région. La région peut être de type radial, le paramètre étant alors le rayon de cette région. La région peut également être de type elliptique.

Selon un mode de réalisation, on définit plusieurs régions au sein du réservoir, et on définit alors pour chaque région un paramètre permettant de modifier les régions ; et

a- on génère une nouvelle réalisation du réservoir, à partir d'une combinaison linéaire des bruits blancs gaussiens, dont les coefficients de combinaison linéaire dépendent des paramètres définis pour chaque région ;

b- on calcule pour chaque région une fonction objectif locale mesurant au sein de chacune d'elles, une différence entre des données dynamiques simulées à partir de la nouvelle réalisation et les données dynamiques mesurées ; et

c- on construit l'image du réservoir en modifiant au moins un des paramètres de façon à minimiser la somme des fonctions objectif locales, et en réitérant à l'étape a).

Selon ce mode de réalisation, au moins une des régions peut être de type radial et/ou de type elliptique.
Selon l'invention, la combinaison linéaire de bruits blancs Gaussiens peut s'écrire de la façon suivante :

$$B_0(X) = \sum_{i=1}^{NR} \alpha_i B_i(X)$$

Avec :

$X$ : une maille discrétisant le réservoir ;

$B_0$ : un bruit blanc gaussien issu de la combinaison linéaire et permettant de générer la nouvelle réalisation ;

$B_i$ : un bruit blanc gaussien permettant de générer une des réalisations indépendantes ;

$NR$ : nombre de bruits blancs gaussiens à combiner ;

$\alpha_i$ : coefficient de la combinaison linéaire, définis par :

$$\alpha_i = \frac{vol(X \cap R_i)}{\sqrt{\sum_{j=1}^{NR} vol^2(X \cap R_j)}}$$

avec :

$vol(V)$ : le volume d'un domaine $V$, défini à partir du paramètre permettant de modifier la région $R$ ;

$R_i$, $R_j$ : une région.

Enfin, selon l'invention, une région peut correspondre à une zone autours d'un puits foré à travers le réservoir, à une zone entre deux puits forés à travers le réservoir, ou encore, à une zone ayant des caractéristiques homogènes identifiées sur des données sismiques.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La Figure 1 montre un réservoir décomposé en deux régions $R_1$ et $R_2$ de forme quelconque.

- La Figure 2 montre le changement de tailles d'une région radiale en fonction du rayon (paramètre) $\lambda$.

- La Figure 3 illustre la variation des réalisations géostatistiques en fonction de la taille de domaine radial (paramètre $\lambda$).

- La Figure 4 montre des domaines elliptiques changeant de tailles et de forme en fonction du paramètre $\lambda$.

- La Figure 5 illustre la variation des réalisations géostatistiques en fonction des paramètres qui définissent les domaines.

- La Figure 6 représente la perméabilité K au sein d'une couche géologique d'un réservoir pétrolier.

- La Figure 7 montre les perméabilités K de deux réalisations indépendantes $Z_1$ (gauche) et $Z_2$ (droite) au sein de la couche géologique de la figure 6.

- La Figure 8 présente des variation de fonctions objectifs global et locales en fonction du paramètre $\lambda_4$., dans le cas d'une région radiale.

- La Figure 9 présente des variation de fonctions objectifs global et locales en fonction du paramètre $\lambda_3$ pour $\lambda_4$ = 13 fixé, dans le cas d'une région radiale.

- La Figure 10 montre les perméabilités des réalisations avant le calage $Z_2$ (gauche) et après le calage $Z_R(2,13)$ (droite) dans la même couche que la figure 6. Les deux cercles correspondent aux régions paramétrisées.

- La Figure 11 présente des variation de fonctions objectifs global et locales en fonction du paramètre $\lambda_4$., dans le cas d'une région elliptique.

- La Figure 12 présente des variation de fonctions objectifs global et locales en fonction du paramètre $\lambda_3$ pour $\lambda_4$ = 13 fixé, dans le cas d'une région elliptique.

- La Figure 13 montre les perméabilités des réalisations avant le calage $Z_2$ (gauche) et après le calage $Z_E(3.38, 3)$ (droite) dans la couche 3. Les deux ellipses correspondent aux régions paramétrisées.

- Les figures 14A à 14E représentent les courbes de production et d'injection avant $(Z_2)$ et après $(Z_E(3.38, 3))$ le calage.

- Les Figures 15A à 15D représentent les courbes de water-cut aux producteurs avant $(Z_2)$ et après $(Z_E(3.38, 3))$ le calage.

**Description détaillée de la méthode**

L'invention est décrite dans le cadre du calage d'historique. Elle comporte principalement quatre étapes

1. Génération d'au moins deux images du réservoir

2. Définitions de régions au sein des images et paramétrisation de ces régions

3. Définition d'une fonction objectif

4. Optimisation des images du réservoir

1. Génération d'au moins deux images du réservoir

Les images des hétérogénéités du réservoir sont générées sur un maillage stratigraphique par des méthodes géostatistiques. Une de ces méthodes géostatistiques consiste à générer d'abord un bruit blanc Gaussien sur un maillage stratigraphique, puis transformer le bruit blanc en une réalisation géostatistique, en prenant en compte la structure géologique. Une telle méthode est décrite par exemple dans M. Leravalec, Bb. Noetinger et L. Hu "The FFT moving average (FFT-MA) generator: an efficient tool for generating and conditioning Gaussian simulations", Mathematical Geology, Vol.32, No.6, 2000.

Soient $B$ un bruit blanc Gaussien généré sur le maillage stratigraphique, $H$ la transformation du bruit blanc en une réalisation géostatistique, et $Z$ la réalisation géostatistique. On note alors leur relation par la formule suivante :

$$Z = H(B)$$

Ces images représentent une carte de propriétés physiques du réservoir : perméabilité, porosité, ...

2. Définitions de régions au sein des images et paramétrisation de ces régions

On définit au sein de ces images des régions de géométries quelconques, qui ne sont pas délimitées par des mailles. Il peut s'agir par exemple, en deux dimensions, de zones circulaires centrées sur les puits traversant le réservoir. Il peut également s'agir de différentes zones ayant des caractéristiques homogènes identifiées sur des données sismiques.

Ces régions sont alors paramétrisées, c'est-à-dire que l'on définit un paramètre permettant de modifier la forme de ces régions. Selon l'invention, cette paramétrisation permet de faire varier les tailles et les formes des régions dans le processus d'optimisation. Cette approche permet de minimiser de façon plus efficace la fonction objectif pour le calage historique, et ainsi de mieux caractériser le réservoir en utilisant les données mesurées.

Il y a plusieurs méthodes pour introduire des paramètres de façon à changer continuellement les tailles et les formes des domaines.

On illustre la technique de paramétrisation des régions à partir d'exemples en deux dimensions, en particulier pour deux types de régions : radiale et elliptique. La méthode de paramétrisation est facilement généralisée aux cas généraux.

*Région radiale*

Une région de type radial est particulièrement intéressante pour le calage sur des données de puits. Le bords d'un domaine radial $C_\lambda$ autour du point $(x_0, y_0)$ peut s'écrire par l'équation :

$$(x - x_0)^2 + (y - y_0)^2 = \lambda^2$$

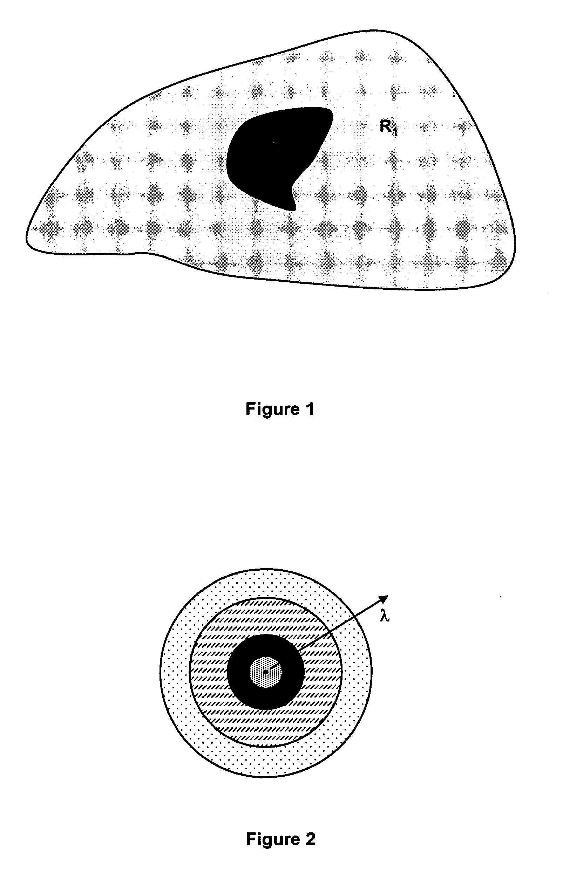

où $\lambda$ est un paramètre correspondant au rayon du domaine. Un changement de la valeur $\lambda$ a pour conséquence une variation de la taille du domaine (figure 2). Pour $\lambda = 0$, le domaine est réduit à un point.

*Région elliptique*

L'utilisation d'une région elliptique est intéressante pour le calage entre un puits injecteur et un puits producteur, ou pour un puits dans un milieu anisotrope.

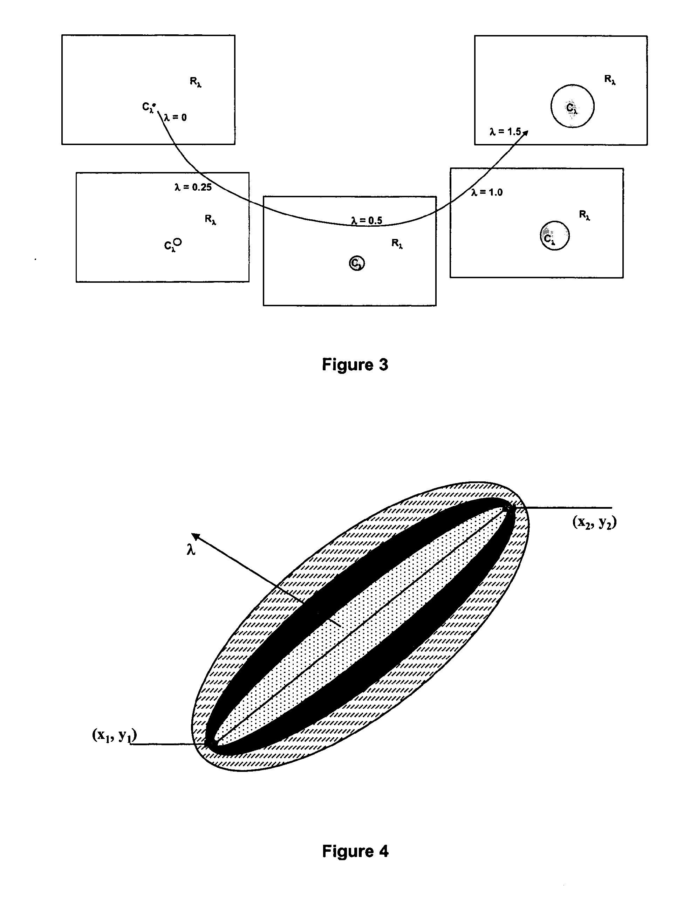

Si le puits injecteur se trouve au point $(x_1, y_1)$ et le puits producteur au point $(x_2, y_2)$, le bord d'une région elliptique entre ces deux points $E_\lambda$ peut être décrit par (figure 4):

$$\sqrt{(x-x_1)^2+(y-y_1)^2}+\sqrt{(x-x_2)^2+(y-y_2)^2}=\lambda^2+\sqrt{(x_1-x_2)^2+(y_1-y_2)^2}$$

où $\lambda$ est un paramètre.

Pour $\lambda = 0$, le domaine est réduit à une ligne liant les deux points $(x_1, y_1)$ et $(x_2, y_2)$. La figure 4 montre des domaines elliptiques changeant de tailles et de forme en fonction du paramètre $\lambda$.

Associée à la définition de ce paramètre $\lambda$, on propose une technique pour construire une nouvelle réalisation, dite « réalisation mixte » à partir de deux réalisations connues sur des domaines quelconques.

Soient $Z_1$ et $Z_2$ deux réalisations géostatistiques (images du réservoir), qui sont générées à partir de bruits blancs Gaussiens $B_1$ et $B_2$ sur le réservoir $R$, c'est à dire,

$$Z_1 = H(B_1) \quad \text{et} \quad Z_2 = H(B_2)$$

Si le réservoir R est décomposé en deux parties $R_1$ et $R_2$ de géométrie quelconque, avec $R_1 \cup R_2 = R$ (figure 1), alors, on construit un nouveau bruit blanc Gaussien $B_0$ en mélangeant spatialement les bruits $B_1$ et $B_2$. Dans le contexte pétrolier, la réalisation géostatistique et le bruit blanc Gaussien sont générés sur un maillage stratigraphique. On peut construire le nouveau bruit blanc Gaussien $B_0$ sur une maille $X$ au moyen de la relation suivante :

$$B_0(X) = \alpha_1 B_1(X) + \alpha_2 B_2(X)$$

où : $\alpha_i = \dfrac{vol(X \cap R_i)}{\sqrt{vol^2(X \cap R_1) + vol^2(X \cap R_2)}}$  *(i = 1, 2)* avec *vol(V)* représentant le volume d'un domaine *V*.

Les coefficients satisfont $\alpha_1^2 + \alpha_2^2 = 1$.

Le volume *V* est directement lié au paramètre $\lambda$, permettant de changer continuellement les tailles et les formes des régions.

Cette combinaison linéaire garantit que la distribution de $B_0$ vérifie une distribution normale standard. On peut donc considérer que $B_0$ est un bruit blanc Gaussien sur le maillage stratigraphique. On note formellement ce nouveau bruit blanc Gaussien par :

$$B_0 = B_1(R_1) + B_2(R_2)$$

On peut alors construire une nouvelle réalisation par :

$$Z_0 = H(B_0)$$

Cette réalisation est une réalisation mixte en combinant $B_1$ et $B_2$ sur les domaines $R_1$ et $R_2$ de géométries quelconques. On note formellement la nouvelle réalisation géostatistique par :

$$Z_0 = Z_1(R_1) + Z_2(R_2)$$

Ainsi, en utilisant la paramétrisation des régions :

*Région radiale*

Soient $Z_1$ et $Z_2$ deux réalisations géostatistiques du réservoir $R$, $R_\lambda = R - C_\lambda$ le complément de $C_\lambda$ dans $R$, alors, la réalisation mixte $Z(\lambda) = Z_1 (R_\lambda) + Z_2 (C_\lambda)$ varie en fonction de $\lambda$. En particulier, on a $Z(0)=Z_1$. Nous pouvons donc générer des nouvelles réalisations géostatistiques en déformant continuellement les domaines autour d'un point dans l'espace, comme l'illustre la figure 3.

*Région elliptique*

Soit $R_\lambda = R - E_\lambda$ le complément de $E_\lambda$ dans $R$, alors, la réalisation mixte $Z(\lambda) = Z_1 (R_\lambda) + Z_2 (E_\lambda)$ varie en fonction de $\lambda$. Encore, on a $Z(0) = Z_1$.

On peut généraliser la construction de la réalisation mixte à partir de plusieurs réalisations connues sur des domaines quelconques.

Soient $R_i$ *(i = 1, ..., NR)* une décomposition de R avec $R = \bigcup_{i=1}^{NR} R_i$ , $Z_j$ *(j = 1, ..., NG)*, les *NG* réalisations géostatistiques indépendantes, qui sont générées avec les bruits blancs Gaussiens $B_j$ *(j = 1, ..., NG)*, alors, sur une maille *X,* on construit un nouveau bruit blanc Gaussien $B_0$ au moyen de la relation suivante :

$$B_0(X) = \sum_{i=1}^{NR} \alpha_i B_{J(i)}(X)$$

où *J(i),* un entier entre *1* et *NG,* correspond au numéro du bruit blanc sur le domaine *i,*

$$\alpha_i = \frac{vol(X \cap R_i)}{\sqrt{\sum_{j=1}^{NR} vol^2(X \cap R_j)}}$$

avec

$$\sum_{i=1}^{NR} \alpha_i^2 = 1.$$

On construit donc une réalisation mixte par : $Z_0 = H(B_0)$

On note symboliquement cette formule par : $B_0 = \sum_{i=1}^{NR} B_{J(i)}(R_i)$ et la nouvelle réalisation géostatistique par : $Z_0 = \sum_{i=1}^{NR} Z_{J(i)}(R_i)$

Les domaines $R_i$ peuvent être paramétrés. Si le domaine $R_i$ est paramétré au moyen du paramètre $\lambda_i$ ($\lambda_i$ peut être un scalaire ou un vecteur), on note $R_{\lambda i}$ ce domaine *NR* ainsi paramétré. La réalisation

$$Z(\lambda_1,...,\lambda_{NR}) = \sum_{i=1}^{NR} Z_{J(i)}(R_{\lambda i})$$ varie graduellement en fonction de paramètres $\lambda_1,...., \lambda_{NR}$.

3 Définition d'une fonction objectif

A partir des images de réservoir, qui représentent par exemple les perméabilités au sein du réservoir, on réalise des simulations d'écoulements. Une fonction objectif est alors utilisée pour calculer les écarts entre ces données simulées et des données mesurées. L'objectif est de sélectionner la meilleure réalisation géostatistique qui minimise la fonction objectif.

On définit une fonction objectif globale F qui peut être décomposée sous la forme suivante :

$$F = \sum_{i=1}^{N} F_i$$

où $F_i \geq 0$ est une fonction objectif locale, qui estime la qualité de simulation pour un ou plusieurs puits ou des attributs sismiques dans une région i. Ces fonctions objectifs locales permettent de quantifier l'impact d'une réalisation dans une région du réservoir R.

4. Optimisation des images du réservoir

L'objectif est de sélectionner la meilleure réalisation géostatistique qui minimise la fonction objectif F. Cependant, si $Z_1$ et $Z_2$ sont deux réalisations géostatistiques ayant pour fonction objectif global $F(Z_2) \leq F(Z_1)$, il est possible d'avoir pour certaines fonctions objectifs locales $F_i$: $F_i(Z_2) > F_i(Z_1)$. Sans perte de généralité, on suppose $F_i(Z_2) > F_i(Z_1)$ pour $i = 1, ..., N_2$ $(N_2 < N)$.

On minimise alors la fonction objectif globale par la construction d'une réalisation mixte sur des régions identifiées, en optimisant les tailles et les formes de ces régions.

Pour chaque région d'influence $R_i$ (i = 1, ..., $N_2$), on dispose d'un paramètre $\lambda_i$ (scalaire ou vecteur), et d'une fonction objectif locale $F_i$. Soient $R_{\lambda i}$ (i = 1, ..., $N_2$) les régions ainsi paramétrisées par $\lambda_i$ et $R_c = R - \bigcup_{i=1}^{N_2} R_{\lambda i}$ la région complémentaire de $\bigcup_{i=1}^{N_2} R_{\lambda i}$ dans le réservoir $R$, alors, on construit une nouvelle réalisation géostatistique paramétrisée, au moyen de la relation suivante :

$$Z(\lambda_1,...,\lambda_{N_2}) = \sum_{i=1}^{N_2} Z_1(R_{\lambda i}) + Z_2(R_c)$$

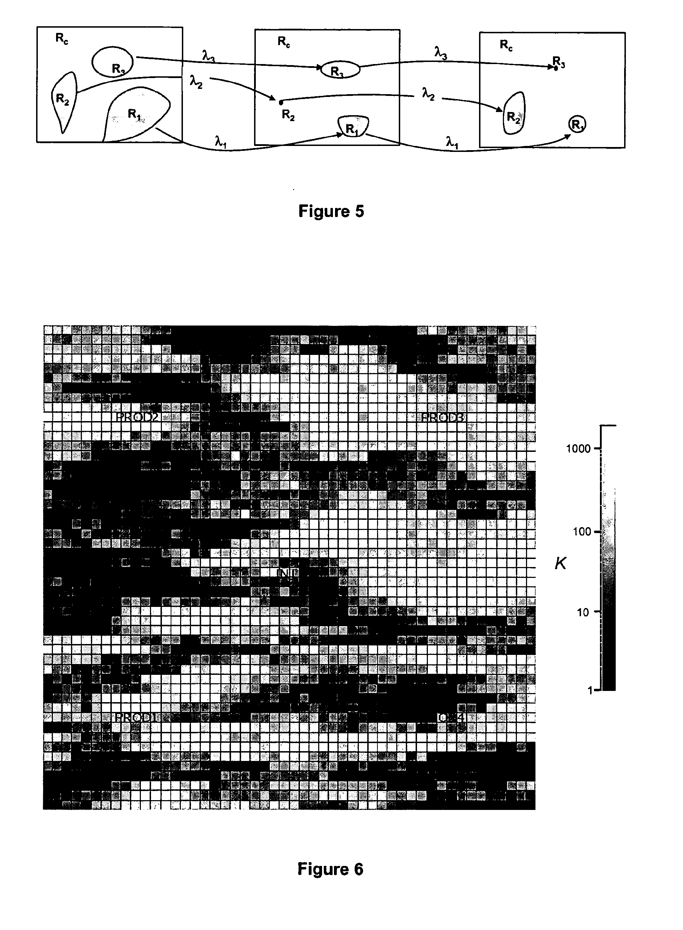

Cette réalisation prend en compte les régions locales de la réalisation $Z_2$ pour minimiser la fonction objectif locale $F_i$ (i = 1, ..., $N_2$). Si toutes les régions $R_{\lambda i}$ (i = 1, ..., $N_2$) sont réduites à un point ou une ligne, on retrouve la réalisation $Z_2$. La variation du paramètres $\lambda_i$ change la réalisation géostatistique $Z(\lambda_1,...,\lambda_{N_2})$, comme l'illustre la figure 5.

Cette approche permet de minimiser de façon plus efficace la fonction objectif pour le calage d'historique, et ainsi de mieux caractériser le réservoir en utilisant les données mesurées.

**Exemple d'application**

Soit un réservoir de taille 2500 m dans la direction x, 2500 m dans la direction $y$ et 50 m dans la direction z.

Ce réservoir est tout d'abord maillé comme l'illustre la figure 6. Ce réservoir est hétérogène, et ses perméabilités ($K$) dans une couche géologique sont présentées sur la figure 6. Cinq puits verticaux sont forés dans ce réservoir dont un puits injecteur (INJ) au milieu de quatre puits producteurs (PROD1, PROD2, PROD3 et PROD4) répartis dans les directions diagonales (figure 6). La pression initiale du réservoir est 250 bars. Les fonctionnements des puits sont à pressions imposées avec 320 bars au puits injecteur et 180 bars aux producteurs. Un historique de 3000 jours est disponible. Les données de production mesurées sont : les débits d'huile aux quatre puits producteurs, le débit d'eau au puits injecteur et les water-cut aux quatre puits producteurs.

La fonction objectif globale, qui mesure les écarts entre les données simulées et les données mesurées, est définie de la façon suivante:

$$F = \frac{1}{2}(\sum_{i=1}^{Nprod} \omega_{o,i} \frac{1}{N_{time}} \sum_{k=1}^{N_{time}} (\frac{Q_{o,i,k}^{obs} - Q_{o,i,k}^{sim}}{\sigma_o(i)})^2 +$$

$$\sum_{i=1}^{Nprod} \omega_{fw,i} \frac{1}{N_{time}} \sum_{k=1}^{N_{time}} (\frac{FW_{i,k}^{obs} - FW_{i,k}^{sim}}{\sigma_{fw}(i)})^2 +$$

$$\sum_{i=1}^{Ninj} \omega_{w,i} \frac{1}{N_{time}} \sum_{k=1}^{N_{time}} (\frac{Q_{w,i,k}^{obs} - Q_{w,i,k}^{sim}(\theta)}{\sigma_w(i)})^2)$$

où

$N_{prod}$ est le nombre de puits producteurs,
$N_{inj}$ est le nombre d'injecteurs,
$N_{time}$ est le nombre de points mesurés,
$\sigma$ est l'intervalle de confiance, $\sigma_o$ est l'intervalle de confiance pour le débit d'huile, $\sigma_w$ est l'intervalle de confiance pour le débit d'eau, et $\sigma_{fw}$ est l'intervalle de confiance pour le water-cut,
$\omega$ est le poids, $\omega_o$ est le poids pour le débit d'huile, $\omega_w$ est le poids pour le débit d'eau, $\omega_{fw}$ est le poids pour le water-cut,
$Q_o$ est le débit d'huile aux producteurs,
$Q_w$ est le débit d'eau à l'injecteur,
$FW$ est le water-cut,
l'exposant *obs* signifie observation,
l'exposant sim signifie simulation.

Dans l'exemple considéré, on a,

$$N_{prod} = 4,$$

$$N_{inj} = 1,$$

$$N_{time} = 30,$$

car on prend une mesure tous les 100 jours jusqu'à 3000 jours,

$$\sigma_o = 20,$$

$$\sigma_w = 50,$$

$$\sigma_{fw} = 0.05,$$

$$\omega_o = 1,$$

$$\omega_w = 1,$$

$$\omega_{fw} = 1.$$

Cette fonction objectif est décomposée en cinq fonctions objectifs locales, liées aux quatre producteurs et au puits injecteur :

$$F = \sum_{i=1}^{5} F_i$$

avec

$$F_1 = \frac{1}{2} \frac{1}{N_{time}} \sum_{k=1}^{N_{time}} \left( \left( \frac{Q_{o,1,k}^{obs} - Q_{o,1,k}^{sim}}{\sigma_o(i)} \right)^2 + \left( \frac{FW_{o,1,k}^{obs} - FW_{o,1,k}^{sim}}{\sigma_{fw}(i)} \right)^2 \right)$$

$$F_2 = \frac{1}{2} \frac{1}{N_{time}} \sum_{k=1}^{N_{time}} \left( \left( \frac{Q_{o,2,k}^{obs} - Q_{o,2,k}^{sim}}{\sigma_o(i)} \right)^2 + \left( \frac{FW_{o,2,k}^{obs} - FW_{o,2,k}^{sim}}{\sigma_{fw}(i)} \right)^2 \right)$$

$$F_3 = \frac{1}{2} \frac{1}{N_{time}} \sum_{k=1}^{N_{time}} \left( \left( \frac{Q_{o,3,k}^{obs} - Q_{o,3,k}^{sim}}{\sigma_o(i)} \right)^2 + \left( \frac{FW_{o,3,k}^{obs} - FW_{o,3,k}^{sim}}{\sigma_{fw}(i)} \right)^2 \right)$$

$$F_4 = \frac{1}{2} \frac{1}{N_{time}} \sum_{k=1}^{N_{time}} \left( \left( \frac{Q_{o,4,k}^{obs} - Q_{o,4,k}^{sim}}{\sigma_o(i)} \right)^2 + \left( \frac{FW_{o,4,k}^{obs} - FW_{o,4,k}^{sim}}{\sigma_{fw}(i)} \right)^2 \right)$$

$$F_5 = \frac{1}{2}\frac{1}{N_{time}}\sum_{k=1}^{N_{time}}(\frac{Q_{w,k}^{obs} - Q_{w,k}^{sim}}{\sigma_w(i)})^2$$

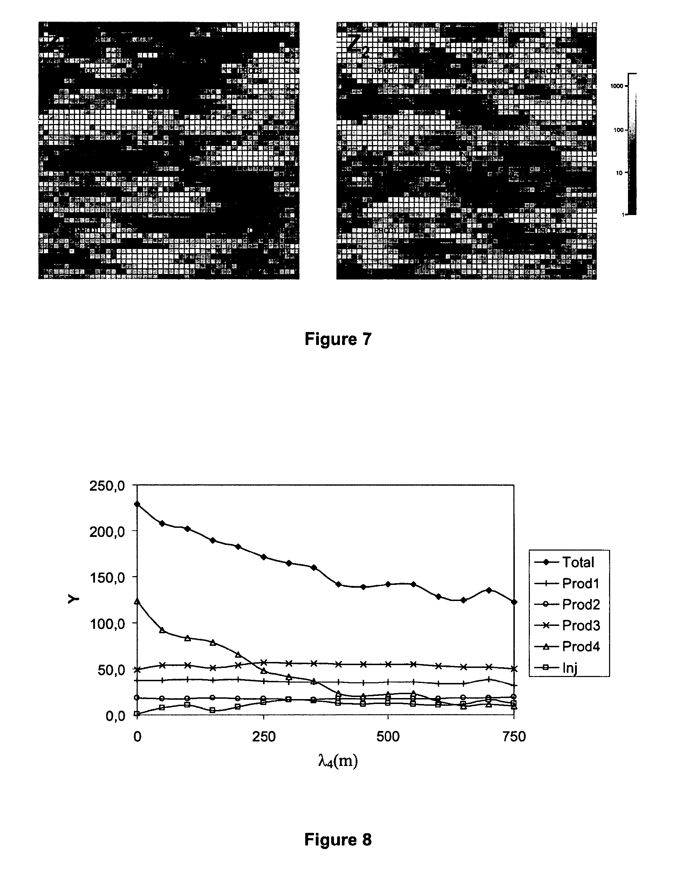

Pour réaliser le calage d'historique, deux réalisations géostatistiques indépendantes $Z_1$ et $Z_2$ sont d'abord générées. La figure 7 montre les perméabilités de ces deux réalisations dans la même couche géologique que la figure 6. Les valeurs de la fonction objectif globale et des fonctions objectifs locales sont présentées dans le tableau suivant:

| Fonction Objectif | $F$ | $F_1$ | $F_2$ | $F_3$ | $F_4$ | $F_5$ |
|---|---|---|---|---|---|---|
| Réalisation $Z_1$ | 367.4 | 102.3 | 61.5 | 22.6 | 44.5 | 136.5 |
| Réalisation $Z_2$ | 229.1 | 37.0 | 18.4 | 48.5 | 123.9 | 1.3 |

La fonction objectif globale de la réalisation $Z_2$ est plus petite que celle de la réalisation $Z_1$. Mais, pour les composants $F_3$ et $F_4$, la réalisation $Z_1$ est meilleure.

1). Paramétrisation avec une région radiale

On définit une région radiale $R_{\lambda 3}$ avec rayon $\lambda_3$ autour du puits PROD3 et une région radiale $R_{\lambda 4}$ avec rayon $\lambda_4$ autour du puits PROD4. On note $R_c = R - (R_{\lambda 3} \cup R_{\lambda 4})$ la région complémentaire de $R_{\lambda 3}$ et $R_{\lambda 4}$ dans le réservoir. On construit une réalisation mixte $Z_R(\lambda_3,\lambda_4)$, fonction de $\lambda_3$ et $\lambda_4$, de la façon suivante:

$$Z_R(\lambda_3, \lambda_4) = Z_2(R_c) + Z_1(R_{\lambda 3}) + Z_1(R_{\lambda 4})$$

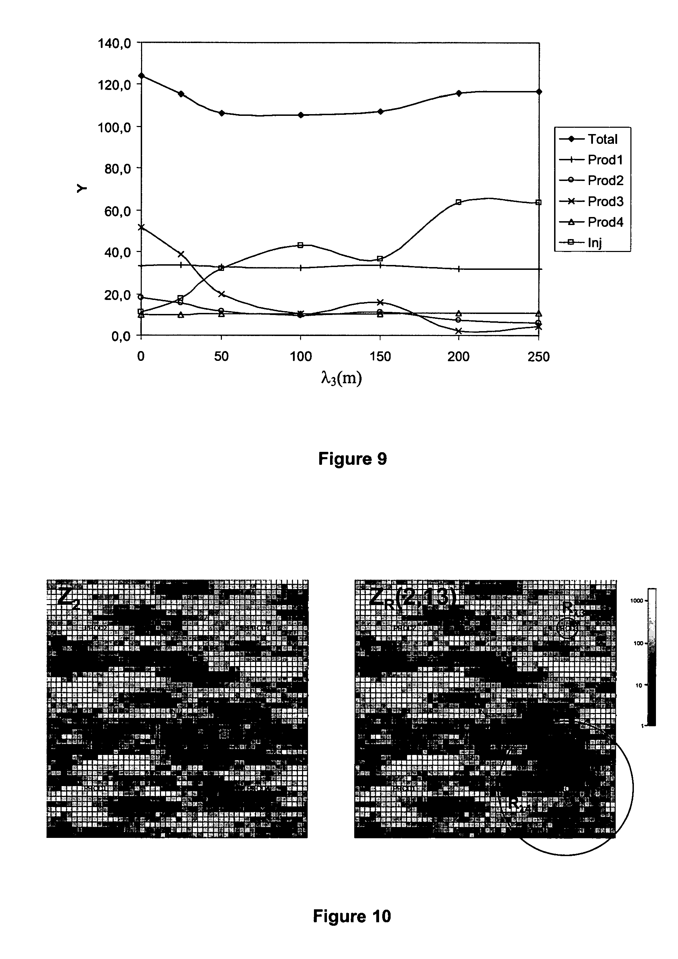

La fonction objectif $F$ varie en fonction de $\lambda_3$ et $\lambda_4$. Pour $\lambda_3 = \lambda_4 = 0$, la réalisation mixte devient $Z_2$, donc, on retrouve la fonction objectif globale de $Z_2$.
La figure 8 présente la variation, en fonction de $\lambda_4$, de la fonction objectif $F$ (représentée par la courbe "Total") et des fonctions objectifs locales ("Prod1" pour la fonction $F_1$, "Prod2" pour la fonction $F_2$, "Prod3" pour la fonction $F_3$, "Prod4" pour la fonction $F_4$, "Inj" pour la fonction $F_5$).
Un changement du paramètre $\lambda_4$ réduit significativement la fonction objectif globale. La valeur minimum ($F = 124.3$) est obtenue autour de $\lambda_4 = 13$. La figure 9 présente la variation de la fonction objectif $F$ (représentée par la courbe "Total") et les fonctions locales ("Prod1" pour la fonction $F_1$, "Prod2" pour la fonction $F_2$, "Prod3" pour la fonction $F_3$, "Prod4" pour la fonction $F_4$, "Inj" pour la fonction $F_5$) en fonction du paramètre $\lambda_3$ pour $\lambda_4 = 13$ fixé. La fonction objectif globale peut être encore réduite, en particulier pour $\lambda_3 = 2$ ($F = 105.7$). Les réalisations avant le calage ($Z_2$) et après le calage ($Z_R(2, 13)$) sur la couche géologique, sont présentées sur la figure 10. Les régions définies et paramétrisées sont entourées par des cercles.
En utilisant une technique d'optimisation numérique, on détermine automatiquement la valeur minimum de la fonction objectif en faisant une recherche en deux dimensions.

2). Paramétrisation avec une région elliptique

On définit une région du type elliptique $E_{\lambda 3}$ entre le puits producteur PROD3 et le puits injecteur avec un paramètre $\lambda_3$, et une région du type elliptique $E_{\lambda 4}$ entre le producteur PROD4 et l'injecteur avec paramètre $\lambda_4$. On note $E_c = R - E_{\lambda 3} \cup E_{\lambda 4}$ la région complémentaire de $E_{\lambda 3}$ et $E_{\lambda 4}$ dans le réservoir, et on construit la réalisation mixte $Z(\lambda_3, \lambda_4)$ de la façon suivante :

$$Z_E(\lambda_3, \lambda_4) = Z_2(E_c) + Z_1(E_{\lambda 3}) + Z_1(E_{\lambda 4})$$

A nouveau, pour $\lambda_3 = \lambda_4 = 0$, la réalisation mixte devient $Z_2$, et on retrouve la fonction objectif de $Z_2$.

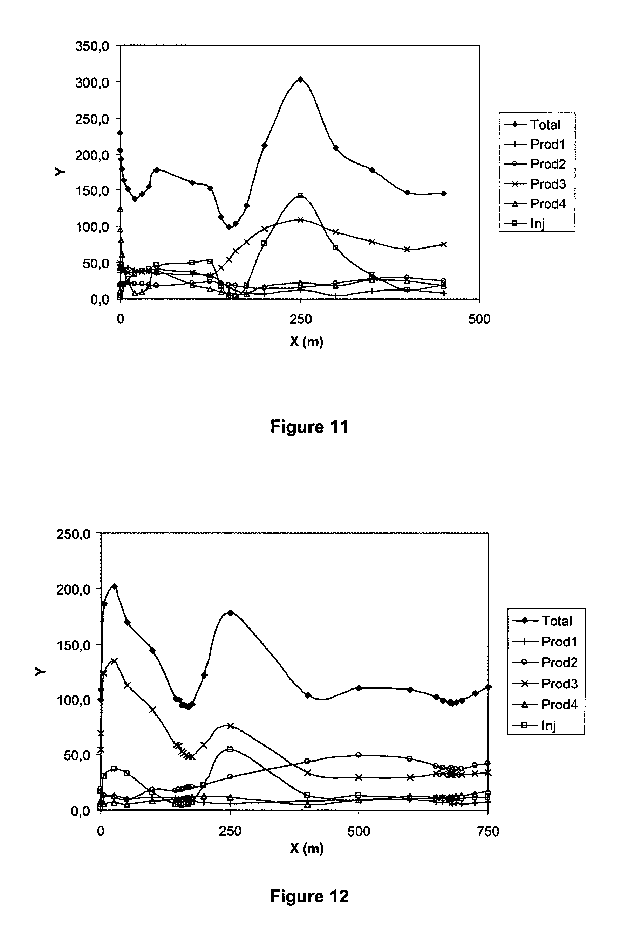

La Figure 11 présente la variation de la fonction objectif F (représentée par la courbe "Total") et les fonction locales ("Prod1" pour la fonction $F_1$, "Prod2" pour la fonction $F_2$, "Prod3" pour la fonction $F_3$, "Prod4" pour la fonction $F_4$, "Inj" pour la fonction $F_5$) en fonction du paramètre $\lambda_4$.

La variation de F en fonction de $\lambda_4$ est présentée sur la figure 11. La meilleure valeur (F = *99.4)* est obtenue autour de $\lambda_4$ = 3. En fixant $\lambda_4$ = 3, la variation de F en fonction de $\lambda_3$ est illustrée sur la figure 12. Cette figure présente la variation de la fonction objectif F (représentée par la courbe "Total") et les fonction locales ("Prod1" pour la fonction $F_1$, "Prod2" pour la fonction $F_2$, "Prod3" pour la fonction $F_3$, "Prod4" pour la fonction $F_4$, "Inj" pour la fonction $F_5$) en fonction du paramètre $\lambda_3$ pour $\lambda_4$ = 3 fixé.

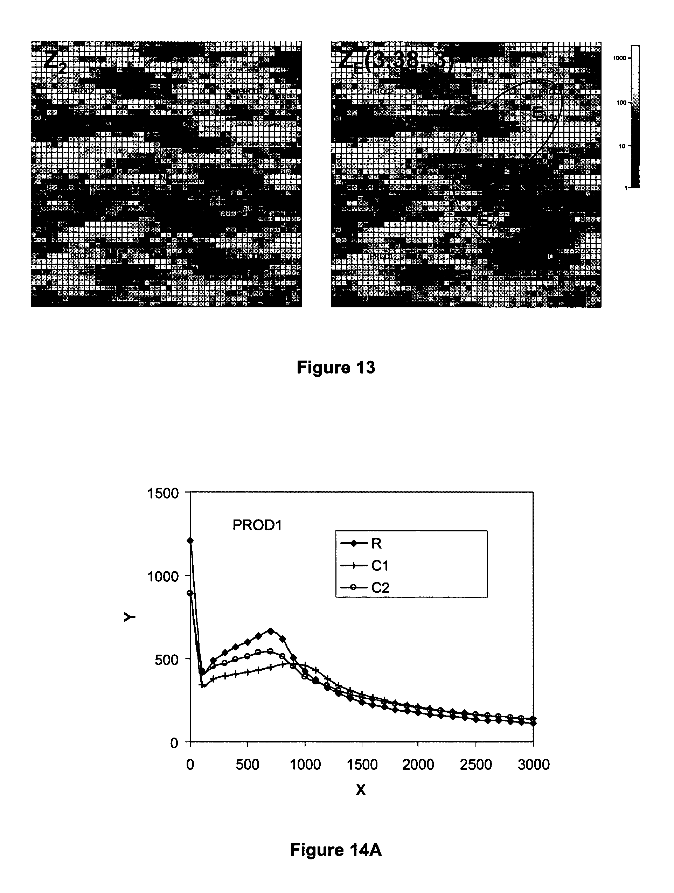

La valeur minimum (F = *92.7)* est trouvée pour $\lambda_3$ = *3.38*. Les réalisations avant $(Z_2)$ et après $(Z_E(3.38, 3))$ le calage sur la couche géologique sont présentées en figure 13. Les régions définies et paramétrisées sont entourées par des ellipses.

Les valeurs de la fonction objectif globale et ses fonctions locales avant le calage $(Z_2)$ et après le calage $(Z_E(3.38, 3))$ sont présentées dans le tableau suivant:

| Fonction Objectif | F | $F_1$ | $F_2$ | $F_3$ | $F_4$ | $F_5$ |
|---|---|---|---|---|---|---|
| Réalisation $Z_2$ | 229.1 | 37.0 | 18.4 | 48.5 | 123.9 | 1.3 |
| Réalisation $Z_E(3.38,3)$ | 92.7 | 9.0 | 19.4 | 48.1 | 10.8 | 5.3 |

Les courbes de production et d'injection avant $(Z_2)$ et après $(Z_E(3.38, 3))$ le calage sont présentées sur les figures 14A à 14E :

- La Figure 14A est le débit d'huile du producteur PROD1. L'axe X est le temps avec l'unité en jour. L'axe *Y* est le débit avec l'unité m$^3$/jour. La courbe R est le débit réel. La courbe *C1* est la simulation avant le calage avec la réalisation $Z_2$, et la courbe C2 est la simulation après le calage avec la réalisation $Z_E(3.38, 3)$.

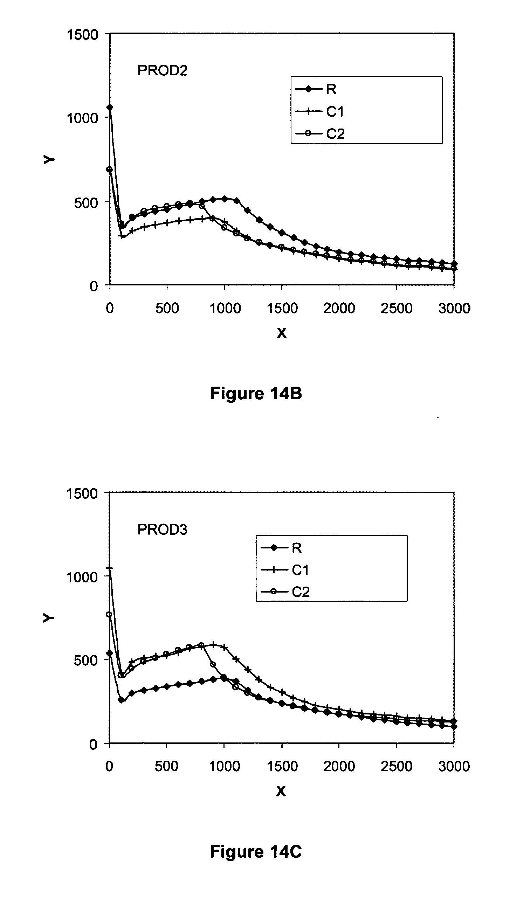

- La Figure 14B est le débit d'huile du producteur PROD2. L'axe X est le temps avec l'unité en jour. L'axe *Y* est le débit avec l'unité m$^3$/jour. La courbe R est le débit réel. La courbe *C1* est la simulation avant le calage avec la réalisation $Z_2$, et la courbe *C2* est la simulation après le calage avec la réalisation $Z_E(3.38, 3)$.

- La Figure 14C est le débit d'huile du producteur PROD3. L'axe X est le temps avec l'unité en jour. L'axe *Y* est le débit avec l'unité m$^3$/jour. La courbe R est le débit réel. La courbe *C1* est la simulation avant le calage avec la réalisation $Z_2$, et la courbe *C2* est la simulation après le calage avec la réalisation $Z_E(3.38, 3)$.

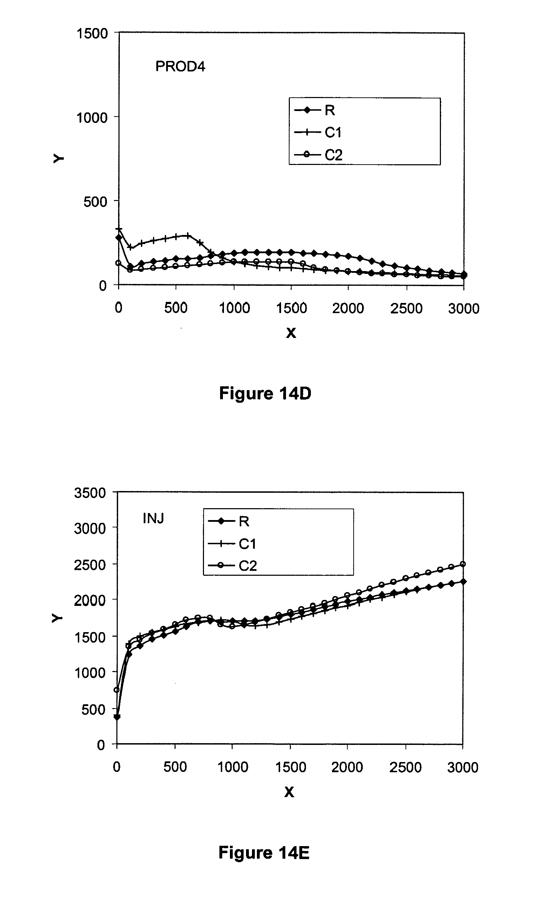

- La Figure 14D est le débit d'huile du producteur PROD4. L'axe X est le temps avec l'unité en jour. L'axe *Y* est le débit avec l'unité m$^3$/jour. La courbe R est le débit réel. La courbe *C1* est la simulation avant le calage avec la réalisation $Z_2$, et la courbe C2 est la simulation après le calage avec la réalisation $Z_E(3.38, 3)$.

- La Figure 14E est le débit d'huile de l'injecteur INJ. L'axe X est le temps avec l'unité en jour. L'axe *Y* est le débit avec l'unité m$^3$/jour. La courbe R est le débit réel. La courbe *C1* est la simulation avant le calage avec la réalisation $Z_2$, et la courbe *C2* est la simulation après le calage avec la réalisation $Z_E(3.38, 3)$.

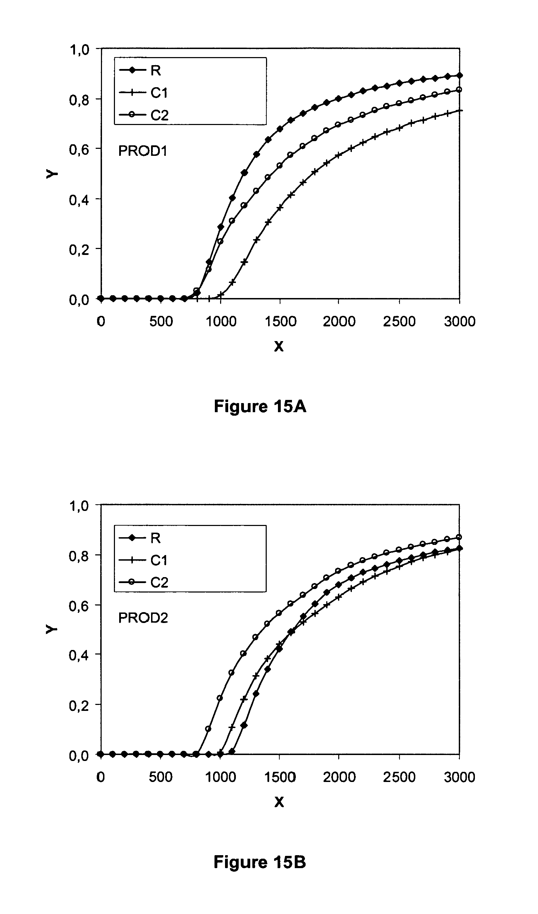

Les courbes de water-cut aux producteurs sont illustrées dans les Figures 15A à 15D :

- La Figure 15A montre le water-cut du puits producteur PROD1. L'axe X est le temps avec l'unité en jour. L'axe *Y* est le water-cut (sans unité). La courbe R est le water-cut réel. La courbe *C1* est la simulation avant le calage avec la réalisation $Z_2$, et la courbe *C2* est la simulation après le calage avec la réalisation $Z_E(3.38, 3)$.

- La Figure 15B montre le water-cut du puits producteur PROD2. L'axe X est le temps avec l'unité en jour. L'axe *Y* est le water-cut (sans unité). La courbe R est le water-cut réel. La courbe *C1* est la simulation avant le calage avec la réalisation $Z_2$, et la courbe *C2* est la simulation après le calage avec la réalisation $Z_E(3.38, 3)$.

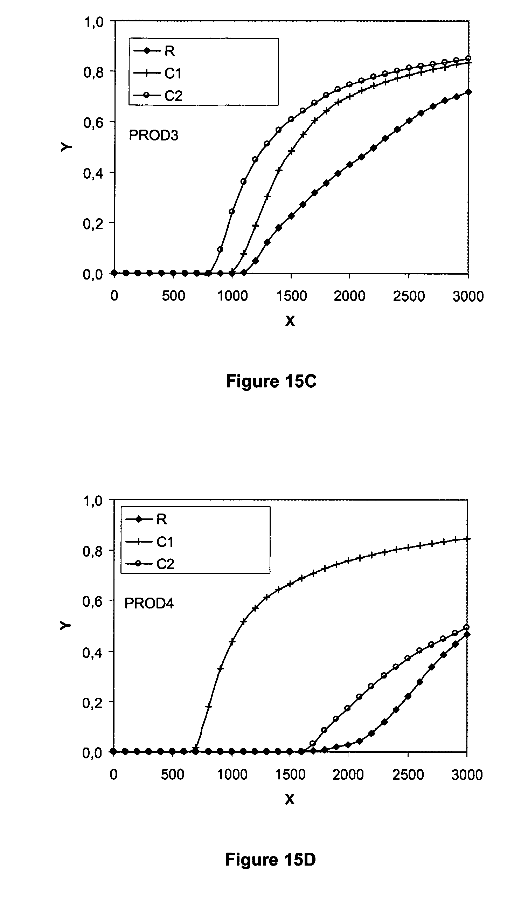

- La Figure 15C montre le water-cut du puits producteur PROD3. L'axe X est le temps avec l'unité en jour. L'axe *Y* est le water-cut (sans unité). La courbe R est le water-cut réel. La courbe *C1* est la simulation avant le calage avec la réalisation $Z_2$, et la courbe *C2* est la simulation après le calage avec la réalisation $Z_E(3.38, 3)$.

- La Figure 15D montre le water-cut du puits producteur PROD4. L'axe X est le temps avec l'unité en jour. L'axe *Y* est le water-cut (sans unité). La courbe R est le water-cut réel. La courbe *C1* est la simulation avant le calage avec

la réalisation $Z_2$, et la courbe $C2$ est la simulation après le calage avec la réalisation $Z_E(3.38, 3)$.

Selon cette paramétrisation, on change les réalisations autour des régions $E_{\lambda 3}$ et $E_{\lambda 4}$, qui contiennent une zone autour de l'injecteur. Le changement de la réalisation autour de l'injecteur a aussi un impact sur d'autres puits producteurs, surtout sur le puits producteur PROD1. Dans la réalisation optimale $(Z_E(3.38, 3))$, les fonctions locales $F_1$ et $F_4$ sont nettement améliorées. Les composantes $F_2$ et $F_3$ sont quasiment stables (amélioration du calage pour le débit d'huile, mais dégradation du calage pour le water-cut). La fonction locale $F_5$ n'est pas beaucoup changée, car les valeurs de cette fonction sont faibles. Globalement, les améliorations sont significatives.

**Revendications**

1. Méthode pour construire une image d'un réservoir pétrolier, à partir de données dynamiques mesurées au sein dudit réservoir, **caractérisé en ce que :**

   a- on génère au moins deux réalisations indépendantes dudit réservoir à partir d'au moins deux bruits blancs gaussiens ;
   b- on définit au moins une région au sein dudit réservoir, et on définit un paramètre permettant de modifier ladite région ;
   c- on génère une nouvelle réalisation dudit réservoir, à partir d'une combinaison linéaire desdits bruits blancs gaussiens, dont les coefficients de combinaison linéaire dépendent dudit paramètre permettant de modifier la région ;
   d- on calcule une fonction objectif locale mesurant au sein de ladite région, une différence entre des données dynamiques simulées à partir de ladite nouvelle réalisation et lesdites données dynamiques mesurées ; et
   e- on construit ladite image du réservoir en modifiant ledit paramètre de façon à minimiser ladite fonction objectif locale, et en réitérant à l'étape c).

2. Méthode selon la revendication 1, dans laquelle ledit paramètre permet de modifier la taille et la forme de ladite région.

3. Méthode selon l'une des revendications 1 et 2, dans laquelle ladite région est de type radial, et ledit paramètre est le rayon de ladite région.

4. Méthode selon l'une des revendications 1 et 2, dans laquelle ladite région est de type elliptique.

5. Méthode selon l'une des revendications précédentes, dans laquelle on définit plusieurs régions au sein dudit réservoir, et on définit pour chaque région un paramètre permettant de modifier lesdites régions ; et

   a- on génère une nouvelle réalisation dudit réservoir, à partir d'une combinaison linéaire desdits bruits blancs gaussiens, dont les coefficients de combinaison linéaire dépendent desdits paramètres définis pour chaque région ;
   b- on calcule pour chaque région une fonction objectif locale mesurant au sein de chacune d'elles, une différence entre des données dynamiques simulées à partir de ladite nouvelle réalisation et lesdites données dynamiques mesurées ; et
   c- on construit ladite image du réservoir en modifiant au moins un desdits paramètres de façon à minimiser la somme desdites fonctions objectif locales, et en réitérant à l'étape a).

6. Méthode selon la revendication 5, dans laquelle au moins une des régions est de type radial.

7. Méthode selon l'une des revendications 5 et 6, dans laquelle au moins une des régions est de type elliptique.

8. Méthode selon l'une des revendications précédentes, dans laquelle ladite combinaison linéaire de bruits blancs Gaussiens s'écrit :

$$B_0(X) = \sum_{i=1}^{NR} \alpha_i B_i(X)$$

*Avec :*

X : une maille discrétisant le dit réservoir ;

$B_0$ : un bruit blanc gaussien issu de ladite combinaison linéaire et permettant de générer ladite nouvelle réalisation ;

$B_i$ : un bruit blanc gaussien permettant de générer une desdites réalisations indépendantes ;

NR : nombre de bruits blancs gaussiens à combiner ;

$\alpha_i$ : coefficient de la combinaison linéaire, définis par :

$$\alpha_i = \frac{vol(X \cap R_i)}{\sqrt{\sum_{j=1}^{NR} vol^2(X \cap R_j)}}$$

avec :

vol(V) : le volume d'un domaine V, défini à partir dudit paramètre permettant de modifier ladite région R ;

$R_i$, $R_j$ : une région.

9. Méthode selon l'une des revendications précédentes, dans laquelle une région correspond à une zone autours d'un puits foré à travers ledit réservoir.

10. Méthode selon l'une des revendications précédentes, dans laquelle une région correspond à une zone entre deux puits forés à travers ledit réservoir.

11. Méthode selon l'une des revendications précédentes, dans laquelle une région correspond à une zone ayant des caractéristiques homogènes identifiées sur des données sismiques.

**Figure 1**

**Figure 2**

Figure 3

Figure 4

**Figure 5**

**Figure 6**

**Figure 7**

**Figure 8**

**Figure 9**

**Figure 10**

**Figure 11**

**Figure 12**

**Figure 13**

**Figure 14A**

**Figure 14B**

**Figure 14C**

**Figure 14D**

**Figure 14E**

**Figure 15A**

**Figure 15B**

**Figure 15C**

**Figure 15D**

Europäisches
Patentamt

European
Patent Office

Office européen
des brevets

**RAPPORT DE RECHERCHE EUROPEENNE**

Numéro de la demande

EP 09 29 0536

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | L.Y. HU AND M. LE RAVALEC-DUPIN: "Elements for an integrated geostatistical modeling of heterogeneous reservoirs" OIL & GAS SCIENCE AND TECHNOLOGY, vol. 59, no. 2, 2004, pages 141-155, XP002520429 * page 148 - page 151 * | 1 | INV. G01V11/00 |
| X | LIN Y HU: "Gradual Deformation and iterative calibration of gaussian-related stochastic models" 1 janvier 2000 (2000-01-01), MATHEMATICAL GEOLOGY, PLENUM PRESS, LONDON, GB, PAGE(S) 87 - 108 , XP008021541 ISSN: 0882-8121 * page 89 - page 96 * | 1 | |
| X | US 2004/138862 A1 (HU LIN-YING [FR] ET AL) 15 juillet 2004 (2004-07-15) * le document en entier * | 1 | |
| A | US 2007/118346 A1 (WEN XIAN-HUAN [US] ET AL) 24 mai 2007 (2007-05-24) * alinéas [0001], [0023], [0069] - [0084] * | 1-11 | DOMAINES TECHNIQUES RECHERCHES (IPC) G01V G06F |
| A | FR 2 851 670 A (INST FRANCAIS DU PETROLE [FR]) 27 août 2004 (2004-08-27) * le document en entier * | 1-11 | |

Le présent rapport a été établi pour toutes les revendications

| Lieu de la recherche | Date d'achèvement de la recherche | Examinateur |
|---|---|---|
| La Haye | 14 décembre 2009 | Vollmer, Thorsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 29 0536

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-12-2009

| Document brevet cité au rapport de recherche | | Date de publication | Membre(s) de la famille de brevet(s) | | Date de publication |
|---|---|---|---|---|---|
| US 2004138862 | A1 | 15-07-2004 | CA<br>FR<br>GB<br>NL<br>NL | 2445858 A1<br>2846767 A1<br>2394813 A<br>1024620 C2<br>1024620 A1 | 30-04-2004<br>07-05-2004<br>05-05-2004<br>14-09-2006<br>06-05-2004 |
| US 2007118346 | A1 | 24-05-2007 | AU<br>CA<br>CN<br>EP<br>WO | 2006316636 A1<br>2630384 A1<br>101356537 A<br>1958120 A2<br>2007061686 A2 | 31-05-2007<br>31-05-2007<br>28-01-2009<br>20-08-2008<br>31-05-2007 |
| FR 2851670 | A | 27-08-2004 | CA<br>EP<br>WO<br>US | 2516540 A1<br>1623086 A2<br>2004079144 A2<br>2006149520 A1 | 16-09-2004<br>08-02-2006<br>16-09-2004<br>06-07-2006 |

EPO FORM P0460

# EP 2 157 451 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Roggero, F. ; Hu, L.Y.** Gradual deformation of continuous geostatistical models for history matching. *paper SPE-49004, Proc. SPE Annual Technical Conference and Exhibition,* 1998
- **Hu, L.Y.** Gradual deformation and iterative calibration of Gaussian-related stochastic models. *Mathematical Geology,* 2000, vol. 32 (1

- **COSTA REIS, L.** Intégration des données dynamiques dans un modèle géostatistique de réservoir. *thèse de doctorat,* 2001
- **M. Leravalec ; Bb. Noetinger ; L. Hu.** The FFT moving average (FFT-MA) generator: an efficient tool for generating and conditioning Gaussian simulations. *Mathematical Geology,* 2000, vol. 32 (6